# EUROPEAN PATENT APPLICATION

(11) **EP 4 694 040 A1**
(43) Date of publication of application: **11.02.2026**
(21) Application number: 24193054.4
(22) Date of filing: 06.08.2024
(51) Int. Cl.: H04L 12/10, H04L 12/40

(54) **COMMUNICATION UNIT FOR A COMMUNICATION SYSTEM**

(71) Applicant: ABB SCHWEIZ AG, 5400 Baden (CH)
(72) Inventor: BOLLMEYER, Stefan, 32425 Minden (DE)
(74) Representative: Maiwald GmbH

(57) **Abstract**

The present invention relates to a communication unit (100) for a communication system (200) comprising:
- at least one IO (input/output)-module (20);
- a communication interface board (10) to connect the at least one IO-module (20) with at least an external device (30) for a data exchange via an external network (40), wherein the external network (40) is capable of transmitting power and data over a common network connection (42);
- a power supply interface (50) configured to receive power from an external power supply provider (60), wherein the power supply interface (50) is configured to supply the at least IO module (20) with power.

## Description

### FIELD OF THE INVENTION

The present invention relates to a communication unit for a communication system.

### BACKGROUND OF THE INVENTION

The connection of field devices (sensors and actuators) to control systems in process industries has been dominated by the 4..20mA/HART technology for decades. In this approach the sensors and actuators are connected to IO-cards of the controller device, which executes the control logic. Besides the analog values, the IO-cards, which may be connected to the controller device locally or remotely (Remote IO) through a bus or network, may also collect auxiliary signals like binary IO.

Now, the Ethernet-APL (= Advanced Physical Layer) technology is lining up to change this paradigm and allowing standardized Ethernet connectivity to a single field device while retaining the simplicity of 4..20mA/HART (power and communication over the same 2-wires, long distances, explosion protection) but providing the benefits of Ethernet (higher communication speed, IP-traffic, easy integration with IT-applications). The new technology will also lead to new topologies of control systems in process industries.

However, the 2-wires of Ethernet-APL do not fully cover all type of applications for the following reasons:
Ethernet-APL focuses on analog signals since the Ethernet overhead is too large for communicating single binary IO-signals. Accordingly, auxiliary signals like binary IO need to be collected separately in an efficient manner. Today, this is typically solved by mounting Remote IOs that are connected to the con-troller device through the network alongside with the Ethernet-APL field-switches. These Remote IOs are connected with their head-stations to the same standard Ether-net backbone like the field-switches. The given approach for auxiliary signals leads to following practical problems:
Whereas sensors and actuators at Ethernet-APL can be easily distributed in the field with long distances (up to 200m between device and field switch), the Remote IO is tied to the Standard Ethernet with max. distances of 100m and the complexity of 4/8 wires.

Available technologies for providing power over the Standard Ethernet (PoE) deviate from the Ethernet-APL paradigm and require a different engineering approach. Consequently, the Remote IOs for collecting auxiliary signals are typically combined in field cabinets together with field-switches and take advantage of the infrastructure given in these cabinets anyhow e.g., power supplies, communication media converters, etc. The preferred way of installation has following disadvantages:
A higher number of wires for auxiliary signals potentially needs to be run for longer distances than desired from the source of the signal to the field cabinet.

Remote IOs require extra ports for connecting to Standard Ethernet and typically comprise of a head station to collect data from various IO-modules and provide power to them through a backplane. Such head stations require extra cabinet space and dedicated engineering effort on network and power supply side.The Remote IOs introduce extra infrastructure to the Ethernet-APL paradigm, which just calls for installation of APL-switches.

Although Remote IO systems are available that provide certain flexibility by selecting the type of IO on a single channel granularity, the number of channels that can be fit into a field cabinet is always limited and needs to be a trade-off between size of the cabinet and desired flexibility. Expanding the IO-count in a defined section of a plant beyond of what was foreseen in the field cabinet during initial engineering is cumbersome and costly.

A known approach to counter some of the challenges of combining Ethernet-APL with the need to collect auxiliary signals is the state of the art as provided by US 2021/0081346 A1. Here the need of installing different infrastructure for APL-switches and auxiliary signals is eliminated by turning the APL-switch-ports into a type of IO-card analog to the IO cards for the auxiliary signals like like binary IO. Drawback of this approach is that the Ethernet-APL part is turned into a different type of IO-card, eliminating the distributed network approach of Ethernet-APL in favor of a more centralized Remote-IO cabinet.

Another approach for collecting binary data in a network designed for communicating analog data while providing power over the same wires is known from fieldbus technology. Here so-called IO-boxes or valve boxes were offered with a fixed count and selection of binary IO, e.g. 4 x DO and 8 x DI to connect on/off-valves and corresponding position- switches. As the power, which can be supplied over the communication wires is limited, the possible IO count and the possible IO types were rather limited and typically not meeting the application demands, e.g. to drive larger valves or relays.

There is a need to address these issues.

### SUMMARY OF THE INVENTION

Therefore, it would be advantageous to provide an improved concept for an improved communication unit for a communication system that can be flexibly and easily adapted to the needs of a changing application scenario and that allows easy installation with less space in a cabinet of a device or even further distributed in the field.

The object of the present invention is solved by the subject matter of the independent claims, wherein further embodiments are incorporated in the dependent claims.

In a first aspect of the present invention, there is provided a communication unit for a communication system comprising:
- at least one IO (input/output)-module;
- a communication interface board to connect the at least one IO-module with at least an external device for a data exchange via an external network, wherein the external network is capable of transmitting power and data over a common network connection;
- a power supply interface configured to receive power from an external power supply provider, wherein the power supply interface is configured to supply the at least IO module with power.

In other words, an important aspect of the present invention is that the communication interface board of the communication unit is provided with data and power by an external network over a common network connection, whereas the at least one IO module is provided separately with power by an external power supply provider using the power supply interface as part of the communication unit.

In this way, the present invention is able to provide a flexible IO-system for mounting, e.g. in field cabinets or smaller field housings, which communicates through Ethernet-APL and is powered separately to provide enough energy for the variety of lO-modules which is a major aspect of the present invention.

In a further aspect of the present invention, the communication interface board connecting to the Ethernet-APL is limited to the footprint and capabilities of a typical sensor or actuator thus creating a natural limitation to the number of lO-modules supported and by that also to size. By this it completely eliminates the overhead of a Remote IO station with a backplane communication bus for collection high counts of IO data.

lO-modules and communication interface are im-plemented as HW-modules to provide full flexibility to deploy different types of IO-modules. Since the required power budget varies depending on the type of IO-modules used, the flexible IO-system comprises of a separate connection for power supply and does not need to draw power from the Ethernet-APL network.

By that solution of the present invention, the flexible IO (Input/Output)-system can be engineered e.g. like a sensor or actuator device. It may be connected to an APL-Spur of an Ethernet-APL switch and can be easily placed inside a field cabinet or elsewhere in the field within a field housing close to other devices taking advantage of the longer reach of Ethernet-APL. Since spare spurs of field-switches are always foreseen during engineering, the 4-wire IO system of the present invention can easily be deployed in case the IO-count for auxiliary signals needs to be expanded.

Therefore, the advantages of the present invention compared to today's approach can be summarized as following:
- Less space needed in field-cabinet for same amount of IO channels.
- Less costs, as no head-station, no backplane bus is required for the communication unit or the communication system.
- Less engineering effort -> same approach like for APL instruments; no separate ports for standard Ethernet necessary.
- Mountable in field devices at higher distances.
- Higher flexibility for expansions.

According to an example, the communication interface board is configured to receive power provided by the external network and/or the external power supply provider. In this way, flexibility of the communication unit is enabled to changing application scenarios.

According to an example, the external network is configured as an Ethernet-APL network or a Single Pair Ethernet (SPE) network. In this way, flexibility of the communication unit is enabled to changing application scenarios. The fact that the communication interface board can receive power from the external power supply provider eases the adaption to different power levels provided, e.g. by Ethernet-APL or SPE.

According to an example, the at least one IO-module comprises a first IO-module with a first low power supply demand and at least a second IO-module with a second high power supply demand, wherein the first IO-module is empowered by the power provided by the external network and wherein the second IO-module is empowered provided by the external power supply provider. In this way, a hybrid and flexible structure of power supply can be easily provided.

According to an example, the communication interface board is configured to support a Spur port class or a Trunk port class according to an Ethernet-APL network. In this way, flexibility of the communication unit is enabled to changing application scenarios.

According to an example, the at least one IO-module comprises at least a configurable IO-channel which can be adopted to their usage by configuration. In this way, a larger flexibility in the selection of different IO-module types (e.g. selection by software) can be ensured.

According to an example, the communication unit comprising a flexible IO-count based on IO-module types that can be selected according to the needed usage based on a single channel HW-granularity. In this way, a larger flexibility in the selection of different IO-module types (e.g. selection by hardware) can be ensured.

According to an example, the communication interface board comprises at least two communication interface boards that are configured to be operated depending on an application scenario. In this way, system availability is increased to provide redundancy of the communication unit and communication system. The redundancy scheme may be based on a hot-standby mechanism where the at least two communication interface boards are operational and communicate at the same time while a voting units is determining what communication path to be selected. In another implementation example the redundancy scheme may be based on a cold-standby mechanism where the at least two communication interface boards are monitored and only if a primary fails to operate normally, a backup takes over. The redundancy scheme may be selected based on the application scenario and whether the application can sustain short interrupts.

According to an example, the power supply interface comprises at least two power supply interfaces that are configured to be switched depending on an application scenario of the communication unit. In this way, system availability is increased to provide redundancy of the communication unit and communication system.

In one preferable embodiment of the invention the power supply interfaces are implemented as passive power bars where the communication interface boards and IO modules implement a voting mechanism to always take power from the bar where power is available.

In another preferable embodiment of the invention the power supply interface is implementing some more sophisticated circuitry to achieve the voting in a centralized way for the communication unit to simplify the circuitry on the communication interface board and IO modules.

According to an example, wherein the communication unit comprising a processing unit to enable the communication unit to perform controlling of the communication system locally by using configuration data that is provided externally. In this way, an improved communication is ensured, as there is no need to have an established communication with a controlling device constantly during operation of an industrial application.

According to an example, the communication unit is mountable at least partly in a field cabinet. In this way, installing flexibility of the communication unit is ensured.

According to an example, the communication unit is mountable at least partly in a junction box type of field housing.

In a second aspect of the present invention, a communication system is provided comprising at least one communication unit according to the first aspect and / or to one of the previous examples that is connected to a control device of an industrial application.

### BRIEF DESCRIPTION OF THE DRAWINGS

Exemplary embodiments will be described in the following with reference to the following drawings:
Fig. 1 illustrates a schematic communication unit according to an embodiment of the present invention;
Fig. 2 illustrates a schematic communication system according to an embodiment of the present invention;
Fig. 3 illustrates a schematic cabinet with a communication unit according to an embodiment of the present invention; and
Fig. 4 illustrates an example of a communication unit according to an embodiment of the present invention.

### DETAILED DESCRIPTION OF THE DRAWINGS

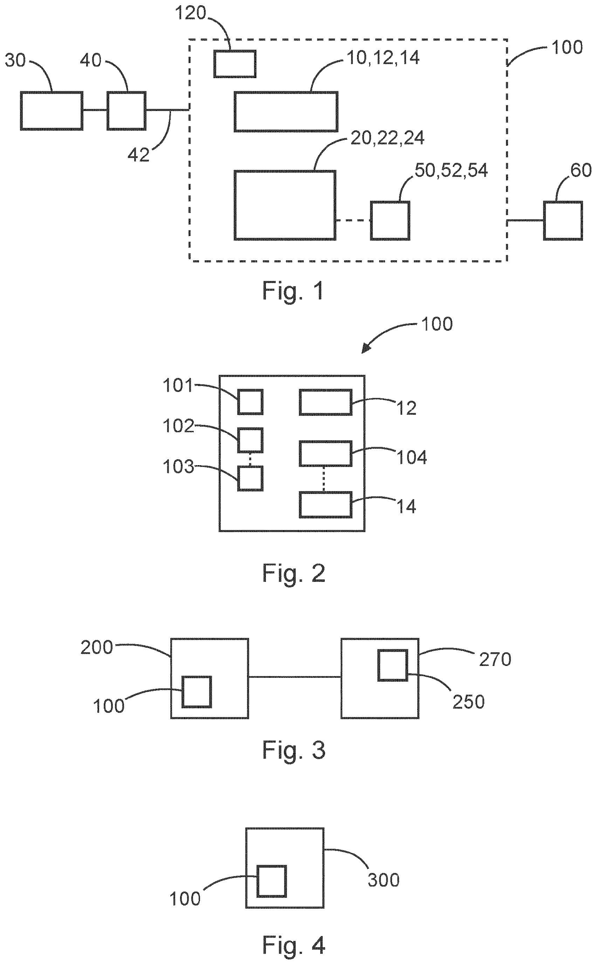

Fig. 1 illustrates a schematic communication unit 100 according to an embodiment of the present invention.

The communication unit 100 for a communication system 200 (see Fig. 3) comprises:
- at least one IO (input/output)-module 20, 22, 24;
- a communication interface board 10 to connect the at least one IO-module 20 with at least an external device 30 (e.g. a Namur switch, a field device or an external communication partner) for a data exchange via an external network 40, wherein the external network 40 is capable of transmitting power and data over a common network connection 42;
- a power supply interface 50, 52, 54 configured to receive power from an external power supply provider 60, wherein the power supply interface 50 is configured to supply the at least IO module 20 with power.

Optionally, the communication interface board 10 is configured to receive power provided by the external network 40 and/or the external power supply provider 60. In an concrete example, the communication interface board 10 is powered by the power which is available over the APL-network 40 while the IO-modules 20, 22, 24 are powered by the external power supply connection 50.

It should be further noted that the at least one IO module 20 provides one or more IO channels connected to one or more devices for example field device(s), sensors, switches, indicators or actuators. The advantage of this embodiment is that the multiple IO modules 20 as powered by the power supply interface 50 can again power connetected field device(s), sensors, switches, indicators or actuators or devices of the communication system 200.

Optionally, the communication interface board 10 is configured to support a Spur port class or a Trunk port class according to an Ethernet-APL network.

Optionally, the communication interface board 10 comprises at least two communication interface boards 12, 14 that are configured to be operated depending on an application scenario. In a concrete example of this optional embodiment, the communication unit 100 supports the deployment of at least two communication interfaces to increase the availability of the communication system in case of failure of one communication interface boards 10 or failure of the network connection to this communication interface board 10. In this way, availability of the communication unit 100 and the communication system 200 can be increased and redundancy of the communication unit 100 and the communication system can be provided.

The first communication interface board 12 and the second communication interface board 14 may be operated in different collobaration modes and synchronization modes, e.g. backup-mode, wherein the first communication interface board 12 continuously receives the data communication what the second communication interface board 14 receives and is then able to take over immediately in case the second communication interface board 14 has a failure. Further, sychronization rules such as hot-standby or cold-standby modes as known in the prior art can be easily implemented in such a configuration of using multiple communication interface boards 12, 14.

Optionally, the external network 40 is configured as an Ethernet-APL network or a Single Pair Ethernet (SPE) network.

Optionally, the at least one IO-module 20 comprises a first IO-module 22 with a first low power supply demand and at least a second IO-module 24 with a second high power supply demand, wherein the first IO-module 22 is empowered by the power provided by the external network 40 and wherein the second IO-module 24 is empowered provided by the external power supply provider 60.

In a concrete example of this optional embodiment, using a plurality of IO-modules 22, 24 enables to build a hybrid nature of power supply, where the communication interface board 10 and the lower power IO-modules 22 (e.g. Namur switches) are powered by the power which is available over the APL-network 40 while only IO-modules 24 with higher power demand are powered by the external power supply connection 60.

Optionally, the at least one IO-module 20 comprises at least a configurable IO-channel which can be adopted to their usage by configuration. In a concrete example of this optional embodiment, the communication unit 100 comprises an IO-module 20 with configurable IO-channels which can be adopted to their usage (AI, AO, DI, DO) by configuration.

Optionally, the communication unit comprising a flexible IO-count based on IO-module types that can be selected according to the needed usage based on a single channel HW-granularity. In this concrete way, a flexible IO-count based on IO-types can be selected according to the needed usage based on single channel HW-granularity.

Optionally, the power supply interface 50 comprises at least two power supply interfaces 52, 54 that are configured to be switched depending on an application scenario of the communication unit 100.

Optionally, the communication unit 100 comprises a processing unit 120 to enable the communication unit 100 to perform controlling of the communication system 200 (cf. Fig. 3) locally by using configuration data that is provided externally.

In a concrete example of this optional embodiment, the invention comprises sufficient computing capabilities for performing the engineering and commissioning of the communication unit 100 locally without the need to have established communication with the controller device. This function is preferably implemented by an embedded Web-Server and a capability to upload configuration data into a control system engineering tool.

Fig. 2 illustrates an example of a communication unit 100 according to an embodiment of the present invention.

The communication unit 100 comprises various the following blocks:
101: Block 1 - Terminal Block for APL-connection
102: Block 2 - Power Terminal Block (PTB)
103: Block 3 - Field Terminal Block (FTB)
104: Block 4 - Single Channel granular Signal-module (SCM)

Fig. 3 illustrates a schematic communication system 200 according to an embodiment of the present invention.

The communication system 200 comprises at least one communication unit 100 that is connected to a control device 250 of an industrial application 270.

Fig. 4 illustrates a schematic cabinet 300 with a communication unit 100 according to an embodiment of the present invention.

The communication unit 100 is mountable at least partly in a field cabinet or field housing 300.

In a further aspect of the present invention, the communication unit 100 is based on a communication interface board 10, 12, 14 that by its nature is hardly different from communication circuitry typically used in ordinary sensors or actuators. However, in contrast to such communication circuits, which are designed to only support a small number of signals, communication interfaces boards in head stations of traditional IO-systems are normally designed to collect a high number (hundreds) of IO-channels in a single place and transmit them most efficiently over a network backbone.

Besides the difference in computing footprint, the head-stations of Remote IOs also need to facilitate a powerful backplane architecture typically containing a communication bus to collect the high amount of signals and to power the IO-modules.

The communication unit 100 of the present invention instead focusses on the overall flexibility and efficiency in installation by avoiding a big backplane infrastructure, limiting the number of supported IO-channels and being satisfied with a lower Ethernet communication speed (10 Mbit/s). This for example allows a point to point connection between the communication interface board and the IO modules instead of a communication bus. Such an architecture allows for simpler circuitry and has lower demand on CPU performance and memory, conse-quently requiring less power (in the range of mW instead of several W).

### Reference signs

- 10: Communication interface board
- 12: First communication interface board
- 14: Second communication interface board
- 20: I/O (Input/Output) module
- 22: First IO module
- 24: Second IO module
- 30: External device
- 40: External network
- 42: Common network connection
- 50: Power supply interface
- 52: First power supply interface
- 54: Second power supply interface
- 60: External power supply provider
- 100: Communication unit
- 101: Block 1 - Terminal Block for APL
- 102: Block 2 - Power Terminal Block (PTB)
- 103: Block 3 - Field Terminal Block (FTB)
- 104: Block 4 - Single Channel granular Signal-module (SCM)
- 120: Processing unit
- 200: Communication system
- 250: Control device
- 270: Industrial application
- 300: Field cabinet

## Claims

1. Communication unit (100) for a communication system (200) comprising:
- at least one IO (input/output)-module (20);
- a communication interface board (10) to connect the at least one IO-module (20) with at least an external device (30) for a data exchange via an external network (40), wherein the external network (40) is capable of transmitting power and data over a common network connection (42);
- a power supply interface (50) configured to receive power from an external power supply provider (60), wherein the power supply interface (50) is configured to supply the at least IO module (20) with power.

2. Communication unit (100) according to claim 1, wherein the communication interface board (10) is configured to receive power provided by the external network (40) and/or the external power supply provider (60).

3. Communication unit (100) according to one of the previous claims, wherein the external network (40) is configured as an Ethernet-APL network or a Single Pair Ethernet (SPE) network.

4. Communication unit (100) according to one of the previous claims, wherein the at least one IO-module (20) comprises a first IO-module (22) with a first low power supply demand and at least a second IO-module (24) with a second high power supply demand, wherein the first IO-module (22) is empowered by the power provided by the external network (40) and wherein the second IO-module (24) is empowered provided by the external power supply provider (60).

5. Communication unit (100) according to claim 3, wherein the communication interface board (10) is configured to support a Spur port class or a Trunk port class according to an Ethernet-APL network.

6. Communication unit (100) according to one of the previous claims, wherein the at least one IO-module (20) comprises at least a configurable IO-channel which can be adopted to their usage by configuration.

7. Communication unit (100) according to one of the previous claims, comprising a flexible IO-count based on IO-module types that can be selected according to the needed usage based on a single channel HW-granularity.

8. Communication unit (100) according to one of the previous claims, wherein the communication interface board Q comprises at least two communication interface boards Q that are configured to be operated depending on an application scenario.

9. Communication unit (100) according to one of the previous claims, wherein the power supply interface (50) comprises at least two power supply interfaces (52, 54) that are configured to be switched depending on an application scenario of the communication unit (100).

10. Communication unit (100) according to one of the previous claims comprising a processor (120) to enable the communication unit (100) to perform controlling of the communication system (200) locally by using configuration data that is provided externally.

11. Communication unit (100) according to one of the previous claims that is mountable at least partly in a field cabinet (300).

12. Communication system (200) comprising at least one communication unit (100) according to one of the previous claims that is connected to a control device (250) of an industrial application (270).
